# EUROPÄISCHE PATENTSCHRIFT

(11) **EP 1 367 201 B1**
(45) Veröffentlichungstag und Bekanntmachung des Hinweises auf die Patenterteilung: **30.08.2006**
(21) Anmeldenummer: 03011604.0
(22) Anmeldetag: 22.05.2003
(51) Int. Cl.: E05B 71/00, B62H 5/14

(54) **Diebstahlsicherung für Zwei- oder Dreiräder**
Antitheft device for two or three wheeled vehicles
Antivol pour véhicule à deux ou trois roues

(30) Priorität: 29.05.2002 DE 20208366 U
(43) Veröffentlichungstag der Anmeldung: 03.12.2003
(73) Patentinhaber: Langhanki, Bruno, 47228 Duisburg (DE)
(72) Erfinder: Langhanki, Bruno, 47228 Duisburg (DE)
(74) Vertreter: Frese-Göddeke, Beate

(56) Entgegenhaltungen:
- EP-A- 0 641 908
- EP-A- 0 967 140
- EP-A- 1 077 173
- US-A- 4 366 605

## Beschreibung

Die Erfindung betrifft eine Diebstahlsicherung nach dem Oberbegriff des Anspruchs 1.

Derartige Diebstahlsicherungen sind bekannt, wobei das bandförmige Element in der Regel ein im Querschnitt rundes Stahlkabel, bestehend aus mehreren Drähten ist, welches mit einem gummiartigen Material ummantelt ist. Das bandförmige Element kann die Form einer Spirale haben, so dass diese Diebstahlsicherung als "Spiralkabel" bekannt ist. Möglich ist auch, dass das bandförmige Element ohne spiralartige Verdrillung, also einfach nur in Form eines Kreises ausgebildet ist.

Die bandförmigen Elemente dieser bekannten Diebstahlsicherungen setzen dem Zugriff eines mit einem Bolzenschneider ausgerüsteten Diebes nur wenig Widerstand entgegen. In wenigen Sekunden kann das bandförmige Element mit einem Bolzenschneider durchtrennt werden.

Die EP 967 140 A beschreibt eine Diebstahlsicherung für Zwei- oder Dreiräder, die einen längsseitig aufklappbaren Ring aufweist, der einen Reifen umschließen kann. Mit dem Ring kann ein bandförmiges Element lose verbunden sein. Beim Abschließen des Rads kann das Verbinden mit dem bandförmigen Element vergessen werden, so dass die Sicherheit gegen Diebstahl vermindert ist.

Die US 4,336,605 beschreibt eine Diebstahlsicherung für Dachlasten an einem Kraftfahrzeug. Die Dachlast wird durch ein bandförmiges Element, das ein Flachband aus Stahl sein kann, mit Hilfe einer Fahrzeugtür oder, eines Fensters gegen Diebstahl gesichert. Das Element ist für die Diebstahlsicherung von Fahrzeugen nicht geeignet.

Aufgabe der Erfindung ist es, eine Diebstahlsicherung für Zwei- oder Dreiräder zu schaffen, die eine hohe Sicherheit bietet und kostengünstig herzustellen ist.

Die Aufgabe ist durch die Merkmale des Anspruchs 1 gelöst. Das Flachband aus hochfestem Metall ist mit einem Bolzenschneider nur schwer zu durchtrennen. Nur die Schlossteile werden gegossen und können Spritzgußteile aus mit Stahlblech verstärktem Kunststoff sein. An die Schlossteile werden entsprechend zurecht geschnittene Stücke eines eines endlosen Flachbands angebracht. Die Befestigung kann kostengünstig beispielsweise durch Punktschweißen oder auf ander Weise erfolgen.

Die Unteranspüche betreffen die Vorteilhafte Ausgestaltung der Erfindung.

Weiterhin wird vorgeschlagen, dass die Schlossteile mit einem Schlüsselteil, insbesondere einem Steckschloss zu sichen sind. Dabei kann ein ähnliches Steckschloss verwendet werden, wie es eingesetzt wird, um Türschlösser gegen den Eingriff eines Dietrichs zu versperren.

Ein hohe Schutz gegen ein Aufbrechen der Schlossteile wird erreicht, wenn sie Überlappungen und/oder Verzapfungen aufweisen.

Die Ausgestaltung nach Anspruch 5 ermöglicht eine weitere Erhöhung der Sicherheit gegen Diebstahl.

Weiterhin wird vorgeschlagen, dass das Flachband eine mittige Verstärkung, insbesondere ein Stahlkabel aufweist. Diese Verstärkung bietet dem Angriff einer Blechschere außerordentlich hohen Widerstand, so dass das auf diese Wiese ausgerüstete Flachband von einer Blechschere nicht zu durchtrennen ist. Der Grund liegt darin, dass eine Blechschere nur zum Durchtrennen von flachem Material, nicht aber zum Schneiden von kabel- oder stangenartigem Material geeignet ist. Ein Bolzenschneider, der zwar die Verstärkung durchtrennen könnte, scheitert an dem bandförmigen Material, weil ein Bolzenschneider nur für ein punktförmiges Durchtrennen, nicht aber für einen linienförmigen Schnitt geeignet ist.

Insbesondere ist es günstig, wenn das Rundkabel durch mittige Öffnungen im Flachband geführt ist und auf diese Weise immer eng an dem Flachband und in der gewünschten mittigen Lage gehalten ist. Nähere Einzelheiten finden sich weiter unten im Ausführungsbeispiel.

Im Folgenden werden Ausfürungsbeispiele der Erfindung anhand der Zeichnung weiter erläutert. Es zeigen
Figur 1 eine perspektivische Darstellung des erfindungsgemäßen Bandes beim Zusammenkoppeln von zwei Fahrrädern,
Figur 2 ein bandförmiges Element ohne Ummantelung,
Figur 3a eine perspektivische Darstellung des einen Schlossteils,
Figur 3b eine perspektivische Darstellung des anderen, korrespondierenden Schlossteils,
Figur 4 das Schlossteil nach Figur 3b in perspektivischer Darstellung mit angeschweißtem Flachband,
Figur 5 eine perspektivische Darstellung von zwei aneinander gefügten Schlossteilen mit angeschweißtem Flachband,
Figur 6 der innere Aufbau des Schlossteils nach Figur 3b und Figur 4 mit eingestecktem Sicherheitsband,
Figur 7 die beiden aneinander liegenden Schlossteile mit einem Sicherheitsband in einer Übersicht,
Figur 8 eine Darstellung entsprechend Figur 7, aber mit einem andersartigen Sicherheitsband,
Figuren 9 bis 13 unterschiedliche Ausführungsformen des erfindungsgemäßen Flachbandes.

In allen Zeichnungen haben gleiche Bezugszeichen die gleiche Bedeutung und werden daher gegebenenfalls nur einmal erläutert.

Das bandförmige Element der erfindungsgemäßen Diebstahlsicherung besteht nach einem Ausführungsbeispiel innen aus einem flachen Stahlband aus nicht rostendem Stahl. Das Stahlband hat eine Dicke von etwa 0,5 bis 1 mm und eine Breite von etwa 16 mm. Vorzugsweise hat das bandförmige Element eine Breite von mindestens 12 mm, um das Durchtrennen mit einem Bolzenschneider und dergleichen möglichst zu erschweren und vorzugsweise völlig zu verhindern. Dieses flache Stahlband ist mit einem Perlonschlauch ummantelt. Dabei kann auch ein anderes Kunstfasermaterial verwendet werden, das ähnlich reißfest ist. Bevorzugt ist auch ein glasfaserverstärkter Silikonschlauch.

Ein Schneidwerkzeug kann ein solches bandförmiges Element nicht oder nur unter größten Schwierigkeiten durchtrennen. Zum einen ist ein Schneidwerkzeug, z. B. ein üblicher Bolzenschneider, in der Regel nicht geeignet, Flachstahl zu durchtrennen.

Die Verbindungselemente für diese erfindungsgemäße Diebstahlsicherung können in an sich bekannter Weise und vielfältig gestaltet sein. So können die Enden des Flachbandes mit unterschiedlichen Schlössern, zum Beispiel üblichen Schlössern, wie sie an den bekannten Spiralkabeln angebracht sind, oder mit Zahlenschlössern ausgestattet sein.

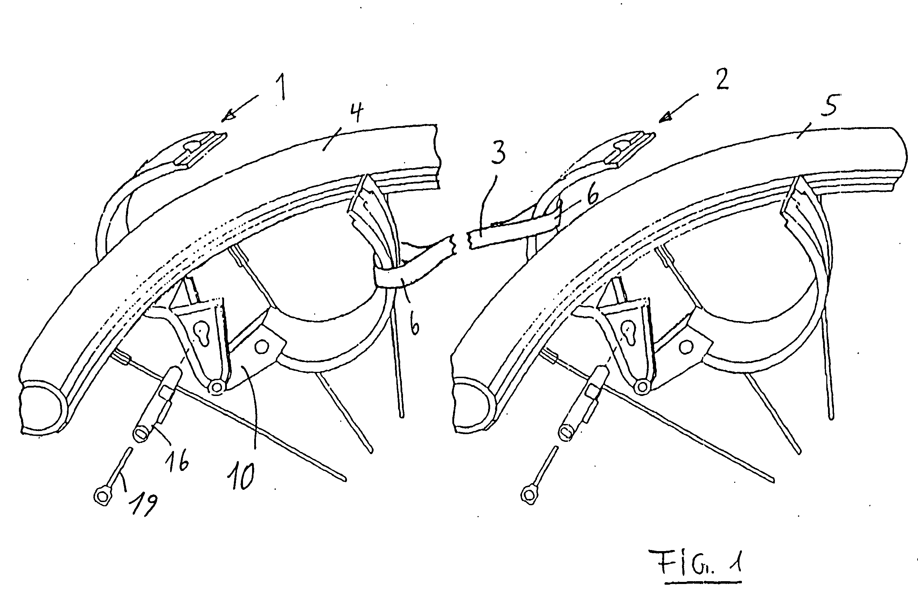

Die Enden des ummantelten Flachbandes können auch die Form von geschlossenen Schlaufen haben, um zum Beispiel in Kombination mit einer Diebstahlsicherung nach der EP 0 967 140 A1 eingesetzt zu werden. So können zwei aus diesem Dokument bekannte ringförmige Diebstahlsicherungen 1, 2 jeweils um einen Hinterreifen 4, 5 eines Fahrrades gelegt und verriegelt werden, wobei diese Diebstahlsicherungen 1, 2 durch das erfindungsgemäße bandförmige Element 3 aneinander gekoppelt werden (Fig. 1). Zuvor werden die bekannten Diebstahlsicherungen 1, 2 durch die beiden Endschlaufen 6 des erfindungsgemäßen Hilfsmittels 3 gesteckt. Auf diese Weise wird der Diebstahl der Räder zusätzlich erschwert, da das Abtransportieren von zwei zusammengekoppelten Rädern auf erhebliche Schwierigkeiten stößt. Ein zusätzlicher Vorteil bei dieser Anwendung liegt in der nur geringen Dicke des bandförmigen Elementes, so dass dieses erfindungsgemäße Hilfsmittel besonders gut in den engen Spalt zwischen den bekannten ringförmigen Diebstahlsicherungen 1, 2 und den jeweiligen Reifen 4, 5 passt.

Möglich ist es auch, das erfindungsgemäße Band entsprechend der Ausführung nach Figur 1 in Kombination mit nur einem Fahrrad zu verwenden. So kann das Band um eine ortsfeste Stange geschlungen, das eine Ende durch die Schlaufe des anderen Endes gesteckt und entsprechend Figur 1 mit der ringförmigen Diebstahlsicherung 1 verbunden werden, so dass das Fahrrad ebenfalls ortsfest gesichert ist.

Anstelle der Befestigung des erfindungsgemäßen Bandes an einer ortsfesten Stange lässt es sich auch am Rahmen des Fahrrades befestigen, um einen potentiellen Dieb zusätzlich abzuschrecken und eine Zerstörung der Diebstahlsicherung weiter zu erschweren.

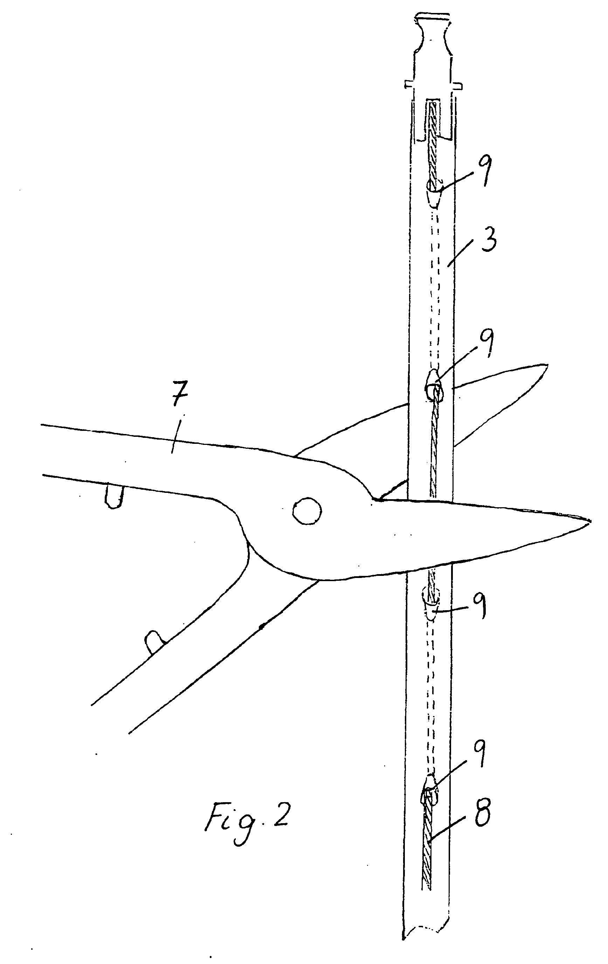

Mit einer Blechschere 7 ist eine scherenartige, schneidende Durchtrennung eines Flachbandes 3 aus Stahl durchaus möglich. In einer weiteren vorteilhaften Ausführungsform (Figur 2) wird daher ein etwa 3 mm dickes Stahlkabel 8 in der Mitte des Stahlbandes 3 platziert. Das Stahlkabel 8 ist durch mittig angebrachte Öffnungen 9 hindurch geführt und wird auf diese Weise mittig und eng anliegend an dem Flachband gehalten. Durch diese Kombination von Flachband 3 aus Stahl und Stahlkabel 8 wird ein schwer zerstörbares Flachband erhalten. Beim Versuch, dieses verstärkte Flachband zu durchtrennen, scheitert die Blechschere 7 am Stahlkabel 8 und der Bolzenschneider am Flachband 3. Der so genannte und sehr häufige Sekundendiebstahl von Fahrrädern, in dem ein zur Sicherung eingesetztes Stahlkabel mit einem Bolzenschneider durchtrennt wird, ist bei dem schwer zerstörbaren Flachband nach Figur 2 nicht mehr möglich.

Weitere enorme Vorteile liegen in der Handhabung. Die unangenehme federnde Eigenschaft der bekannten Stahlkabel, insbesondere der Spiralkabel, ist bei solchen Flachbändern nicht vorhanden.

Möglich ist es außerdem, die Enden des bandförmigen Elementes mit an sich bekannten Schlössern, zum Beispiel den für Spiralkabel eingesetzten Schlössern oder Zahlenschlössern zu verbinden, so dass sich das bandförmige Element in Kombination mit diesem Schloss als eigenständige Diebstahlsicherung einsetzen lässt. So kann das bandförmige Element beispielsweise mit seinen Enden auch an die Außenseiten des Verbindungselementes 10 der ringförmigen Diebstahlsicherung 1 (Figur 1) punktförmig angeschweißt werden.

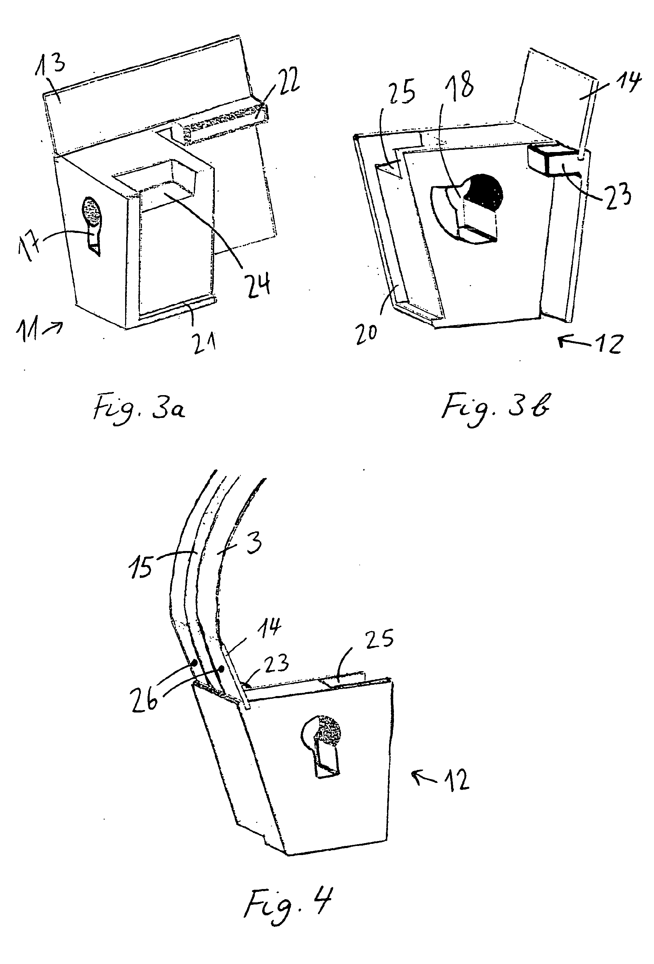

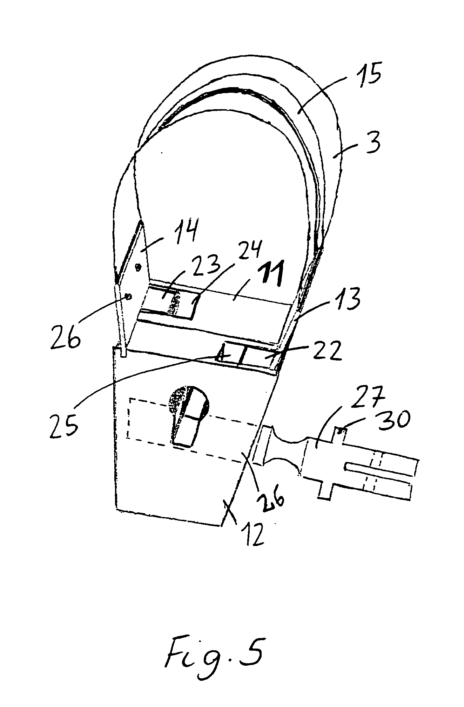

Derartige Schlossteile 11, 12, aber mit zwei völlig voneinander lösbaren und andererseits mit einem Schlüssel zu sichernden Teilen sind in einer vorteilhaften Ausführungsform in den Figuren 3a und 3b perspektivisch dargestellt. Beide korrespondierenden Schlossteile 11, 12 sind, bis auf die Lage des weiter unten erläuterten Anschlusses für ein zusätzliches Sicherheitsband, identisch. Diese Ausführung bietet einen noch weitaus höheren Schutz gegen Diebstahl als das zuvor beschriebene Flachband 3 in Alleinstellung. Bei der Diebstahlsicherung nach den Figuren 3a, 3b bis Figur 8 wird das bandförmige Element 3, das in diesem Fall nicht ummantelt sein muss, mit seinen Enden an die jeweilige Außenlasche 13, 14 des jeweiligen Schlossteils 11, 12 punktförmig angeschweißt (Figuren 4 und 5). Vorteilhaft ist die Innenseite des bandförmigen Elements mit einem gummiartigen Material ausgekleidet, um die Felge zu schonen. In den Figuren 4 und 5 sind die Schweißpunkte 26 angedeutet. Die Breite von etwa 40 mm des aus vergütetem Bandstahl bestehenden Flachbandes 3 macht ein Durchtrennen mit einem Bolzenschneider unmöglich. Ein anstelle des Stahlkabels 8 beim Flachband nach Figur 2 angebrachtes etwa 13 mm breites und dickes Verstärkungsband 15, ebenfalls aus Stahl, bietet einer Blechschere den gewünschten Widerstand. Ein Durchtrennen dieses Verstärkungsbandes 15 mit der Blechschere ist nicht möglich.

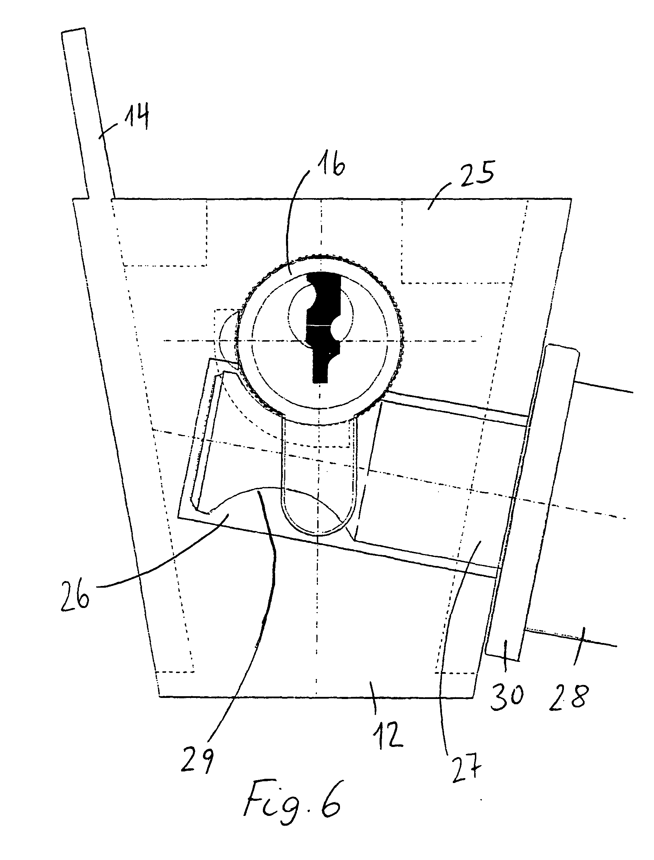

Beide Schlossteile 11, 12 werden durch Einstecken eines Steckschlosses 16 (Figuren 1 und 6) in die miteinander fluchtenden Öffnungen 17, 18 fest miteinander verbunden, wenn die Schlossteile 11, 12 in der richtigen Weise aneinander anliegen. Nach dem Abziehen des zugehörigen Schlüssels 19 (Figur 1) ist das Steckschloss 16 gegen ein Herausziehen aus den Öffnungen 17, 18 gesperrt, so dass die Schlossteile 11, 12 formschlüssig fest miteinander verbunden sind.

Eine zusätzliche Sicherheit dieser miteinander verbundenen Schlossteile 11, 12 gegen ein Aufbrechen mit einem meißelartigen Gegenstand bieten die Überlappungen 20, 21 (Figuren 3a und 3b) sowie die vorgesehenen Verzapfungen mittels zweier Riegelteile 22, 23, die im geschlossenen Zustand des Schlosses in entsprechende Ausnehmungen 24, 25 des jeweils anderen Schlossteiles 11, 12 eingreifen.

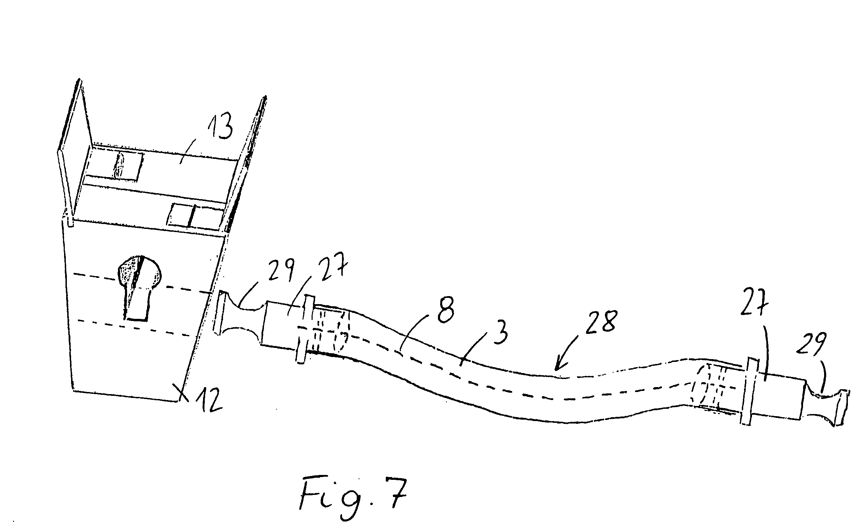

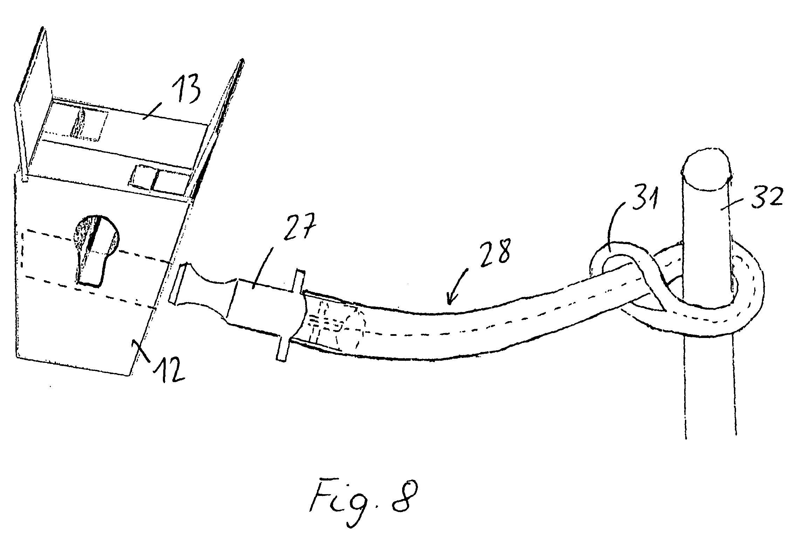

Eine besonders vorteilhafte Ausführungsform dieses Schlosses wird in den Figuren 5 und 6 dargestellt, wobei die Figuren 7 und 8 beispielhaft zwei Verwendungsmöglichkeiten zeigen. Neben dem Hauptzweck des Schlosses, um einen Vorder- oder Hinterreifen eines Zweirades entsprechend der Diebstahlsicherung nach Figur 1 herumgelegt zu werden, ist hier zusätzlich ein Anschluss in Form einer seitlichen Öffnung 26 für eine Anschlusskupplung 27 eines zusätzlichen Sicherheitsbandes 28 vorgesehen.

Dieses Sicherheitsband kann wie das bandförmige Element 3, das oben erläutert worden ist, aufgebaut sein. Die Anschlusskupplung 27 des Sicherheitsbandes 28 wird, ebenso wie die beiden Schlossteile 11, 12 mit demselben Steckschloss 16 innerhalb der Schlossteile gesichert, so dass das Sicherheitsband 28 nur dann herausgezogen werden kann, wenn das Steckschloss 16 mit dem Schlüssel 19 entriegelt und aus den Öffnungen 17, 18 herausgezogen worden ist. Dazu weist die Anschlusskupplung 27 eine an die Form des Steckschlosses 16 angepasste umlaufende Ringnut 29 auf, wobei die zylindrische Außenseite des Steckschlosses 16 im verriegelten Zustand an dieser Ringnut 29 und zwar quer zu dieser anliegt, wie es in Figur 6 gezeigt ist. Eine Anschlagschulter 30 der Anschlusskupplung 27 dient zum Festlegen der gewünschten Lage dieser Kupplung beim Einstecken in die Öffnung 26.

Auf diese Weise lassen sich zwei um entsprechende Reifen der Zweiräder geschlungene Schlösser mit einem Sicherheitsband 28 verbinden, wie es in Figur 7 angedeutet wird. Wenn das Sicherheitsband 28 an dem einen Ende eine Schlaufe 31 aufweist, kann das Fahrrad zusätzlich an einem festen Gegenstand, beispielsweise einem Pfosten 32 oder einem Geländerstab gesichert werden. Die Anschlusskupplung 27 (Einsteckbolzen) des Sicherheitsbandes 28, das wie das oben genannte erfindungsgemäße Flachband aufgebaut sein kann, wird dann durch das Steckschloss 16 in den Schlossteilen im abgeschlossenen Zustand verriegelt.

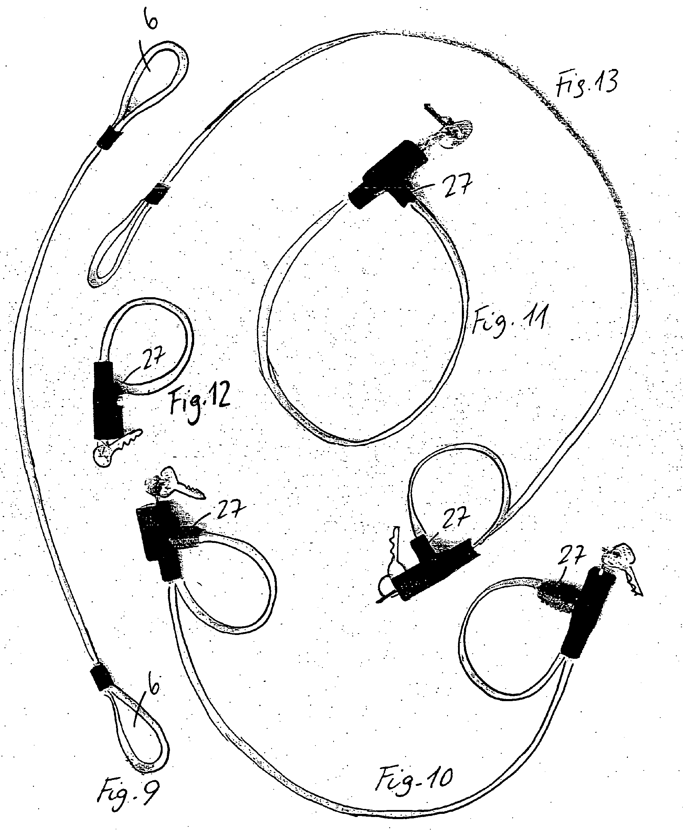

Einige Variationen des erfindungsgemäßen Flachbandes sind in den Figuren 9 bis 13 dargestellt. Neben einem schwer zerstörbaren Flachband mit zwei Endschlaufen (Figur 9), welches entsprechend Figur 1 eingesetzt werden kann, sind auch Flachbänder mit einer verriegelbaren Anschlusskupplung 27 von Vorteil. Diese Anschlusskupplung 27 kann wie die Anschlusskupplung in den Figuren 5 bis 8 aufgebaut sein. Die mit dieser Anschlusskupplung 27 versehenen engen Schlaufen lassen sich um den Reifen eines Vorder- oder Hinterrades schlingen. So kann dieses Flachband an einem oder an zwei Fahrrädern befestigt werden. Mit der großen Schlaufe des Flachbandes nach Figur 11 lässt sich das Fahrrad an einem ortsfesten Gegenstand, zum Beispiel einem Pfosten oder einer sonstigen Stange befestigen. Das relativ kleine Schloss nach Figur 12 dient als besonders preiswerte Wegfahrsperre, wenn das Flachband um den Reifen geschlungen ist. Viele andere weitere Möglichkeiten zur Befestigung bieten diese und andere Variationsmöglichkeiten des schwer zerstörbaren Flachbandes. Dabei kann das Flachband entsprechend Figur 2 mit einem eingelegten Stahlkabel ausgerüstet sein.

Die Herstellung der Endschlaufen für die in den Figuren 1 und 9 bis 13 gezeigten Ausführungen der erfindungsgemäßen Diebstahlsicherung ist durch Punktschweissen möglich. Diese besonders kostengünstige Herstellung kann dann auch zu einem besonders niedrigen Preis für den Endverbraucher führen.

Vorteile bietet die Diebstahlsicherung nach den Figuren 3a bis 8 vor allem auch durch ihre kostengünstige Bauweise. Dadurch ist es möglich, je nach Art des Zweirades und der gewählten Anbringungsart der Diebstahlsicherung verschiedene Größen und Formen bei identischen Schlossteilen herzustellen, ohne dass größere Mehrkosten dadurch entstehen. Auf diese Weise ist es möglich, zu den verschiedenen Felgengrößen jeweils ein Schloss in optimaler Größe anzubieten, so dass das bandförmige Element eng am Reifen anliegt und dadurch ein Bolzenschneider nicht in der Lage ist, zwischen dem Schloss und dem Reifen einzugreifen, um das Schloss zu zerstören. Selbst wenn versucht werden sollte, das Schloss mit einer Trennscheibe durchzuschneiden, ist die Gefahr, den Reifen zu beschädigen, so groß, dass der Dieb von einem Diebstahl Abstand nehmen wird, da er eher den leichteren Weg vorzieht.

Die Diebstahlsicherung ist für Zwei- oder Dreiräder, beispielsweise Fahrräder, Mofas und Motorräder geeignet. Das erläuterte schwer zerstörbare Flachband ist den aus dem Stand der Technik bekannten Rundkabelschlössern an Sicherheit weit überlegen. Ein von Fahrraddieben üblicherweise eingesetzter Bolzenschneider zum Durchtrennen der Rundkabelschlösser ist nämlich zum Durchtrennen eines Flachstahls nicht geeeignet. Der Grund dürfte darin liegen, dass beim Einsatz eines Bolzenschneiders keine scherenartige schneidende Durchtrennung, sondern ein Quetschen des Materials im Bereich der Schneidbacken und zwar linienförmig vorgenommen wird. Dagegen ist der Bolzenschneider ideal zum Durchkneifen von Rundeisen oder Rundkabel und damit das beliebteste Werkzeug der Fahrraddiebe. Wird Rundmaterial durchtrennt, so drücken die Schneidbacken des Bolzenschneiders punktförmig, so dass der Widerstand nur gering ist. Sogar gute Seitenschneider sind in der Lage, mühelos die aus dem Stand der Technik bekannten Rundkabelschlösser zu knacken. Dagegen bietet die erfindungsgemäße Diebstahlsicherung einen derart hohen Widerstand beim Angriff eines Bolzenschneiders, so dass die Sicherheit gegen Diebstahl entsprechend hoch ist.

### Bezugszeichenliste

- 1: ringförmige Diebstahlsicherung
- 2: ringförmige Diebstahlsicherung
- 3: bandförmiges Element, Flachband
- 4: Hinterreifen
- 5: Hinterreifen
- 6: Schlaufe, Endschlaufe
- 7: Blechschere
- 8: Stahlkabel, Rundkabel
- 9: Öffnung
- 10: Verbindungselement
- 11: Schlossteil
- 12: Schlossteil
- 13: Außenlasche
- 14: Außenlasche
- 15: Verstärkungsband
- 16: Steckschloss
- 17: Öffnung
- 18: Öffnung
- 19: Schlüssel
- 20: Überlappung
- 21: Überlappung
- 22: Riegelteil
- 23: Riegelteil
- 24: Ausnehmung
- 25: Ausnehmung
- 26: Öffnung (Anschluss)
- 27: Anschlusskupplung
- 28: Sicherheitsband
- 29: Ringnut
- 30: Anschlagschulter
- 31: Schlaufe
- 32: Pfosten

## Patentansprüche

1. Diebstahlsicherung für Zwei- oder Dreiräder, wie Fahrräder, Mofas, Motorräder, mit einem bandförmigen Element (3)
und jeweils einem Verbindungselement an beiden Enden des bandförmigen Elements (3),
**dadurch gekennzeichnet, dass** das bandförmige Element (3) als ein Flachband aus hochfestem Metall, insbesondere rostfreiem Stahl ausgebildet ist,
und dass die Enden des bandförmigen Elements (3) an korrespondierenden Schlossteilen (11, 12) befestigt sind, die einerseits völlig voneinander lösbar und andererseits miteinander für Unbefugte unlösbar verbindbar und dabei insbesondere mit einem Schlüssel (19) abschließbar sind.

2. Diebstahlsicherung nach Anspruch 1, **dadurch gekennzeichnet, dass** die Schlossteile (11, 12) mit einem Schlüsselteil, insbesondere einem Steckschloss (16) zu sichern sind.

3. Diebstahlsicherung nach Anspruch 1 oder 2, **dadurch gekennzeichnet, dass** die Schlossteile (11, 12) Überlappungen (20, 21) oder Verzapfungen (22, 23, 24, 25) aufweisen.

4. Diebstahlsicherung nach einem der Ansprüche 1 bis 3, **dadurch gekennzeichnet, dass** die Schlossteile (11, 12) identisch sind.

5. Diebstahlsicherung nach einem der Ansprüche 1 bis 3, **dadurch gekennzeichnet, dass** mindesetens eines der Schlossteile (11, 12) einen Anschluss (26) für ein zusätzliches Sicherheitsband (28) aufweist.

6. Diebstahlsicherung nach einem der Ansprüche 1 bis 5, **dadurch gekennzeichnet**, das Flachband (3) mit einem Kunststoffschlauch ummantelt ist

7. Diebstahlsicherung nach einem der Ansprüche 1 bis 6, **dadurch gekennzeichnet, dass** das Flachband (3) eine mittige Verstärkung, insbesondere ein Stahlkabel (8) aufweist.

8. Diebstahlsicherung nach einem der Ansprüche 1 bis 7, **dadurch gekennzeichnet, dass** das Stahlkabel durch mittige Öffnungen im Flachband (3) geführt ist.

## Claims

1. Anti-theft device for two or three-wheelers, such as cycles, motor-assisted cycles and motorbikes, comprising a band-shaped element (3) with a connecting element at each end of the band-shaped element (3), **characterised in that** the band-shaped element (3) consists of high-strength metal, in particular stainless steel, and **in that** the ends of the band-shaped element (3) are attached to two corresponding locking components (11, 12), which, on the one hand, can be completely released one from the other and, on the other hand, can be connected one to another so that they cannot be released by unauthorized persons and, in particular, **in that** they can be locked by means of a key (19).

2. Anti-theft device according to Claim 1, **characterised in that** the locking components (11, 12) can be secured by means of a locking unit, in particular a plug-type lock (16).

3. Anti-theft device according to Claims 1 and 2 **characterised in that** the locking components (11, 12) comprise overlapping sections (20, 21) or plug-type joining elements (22, 23, 24, 25).

4. Anti-theft device according to Claims 1 to 3, **characterised in that** the locking components (11, 12) are identical.

5. Anti-theft device according to Claims 1 to 3, **characterised in that** at least one of the locking components (11, 12) comprises a connecting attachment (26) for an additional security band.

6. Anti-theft device according to Claims 1 to 5, **characterised in that** the flat band (3) is enclosed inside a plastic tube.

7. Anti-theft device according to Claims 1 to 6, **characterised in that** the flat band (3) comprises a central reinforcement, in particular a steel cable (8).

8. Anti-theft device according to Claims 1 to 7, **characterised in that** the steel cable (8) is led thorough openings in the middle of the flat band (3).

## Revendications

1. Dispositiv antivol pour vehicules à deux ou trois roues comme les bicyclettes, les cyclomoteurs, les motos, avec un élément (3) en forme de bande et respectivement un élément de liaison sur les deux extrémités de l'élément (3) en forme de bande, **caractérisé par le fait que** l'élément (3) en forme de bande consiste en une bande plate en métal très résistant, et notamment en acier inoxydable, et que les extrémités de l'élément (3) en forme de bande sont fixées sur les éléments de la serrure (11, 12) correspondants, lesquels peuvent d'une part être assemblés de manière totalement détachable l'un de l'autre et, d'autre part, de manière indétachable pour les non-autorisés et pouvant être notamment fermés à clé avec une clé (19).

2. Dispositiv antivol selon la revendication 1, **caractérisée par le fait que** les éléments de serrure (11, 12) sont sécurisés par un élément de clé, notamment par une serrure enfichable (16).

3. Dispositiv antivol selon la revendication 1 ou 2, **caractérisée par le fait que** les éléments de serrure (11, 12) présentent des recouvrements (20, 21) ou des pivots (22, 23, 24, 25).

4. Dispositiv antivol selon l'une des revendications 1 à 3, **caractérisée par le fait que** les éléments de serrure (11, 12) sont identiques.

5. Dispositiv antivol selon l'une des revendications 1 à 3, **caractérisée par le fait qu'**au moins l'un des éléments de serrure (11, 12) présente un raccord (26) pour une bande de sécurité supplémentaire (28).

6. Dispositiv antivol selon l'une des revendications 1 à 5, **caractérisée par le fait que** la bande plate (3) est enrobée d'un flexible en matière plastique.

7. Dispositiv antivol selon l'une des revendications 1 à 6, **caractérisée par le fait que** la bande plate (3) présente un renforcement central, notamment un câble en acier (8).

8. Dispositiv antivol selon l'une des revendications 1 à 7, **caractérisée par le fait que** le câble en acier est guidé par des ouvertures centrées dans la bande plat (3).
